# EUROPEAN PATENT SPECIFICATION

(11) **EP 2 500 995 B1**
(45) Date of publication and mention of the grant of the patent: **27.12.2017**
(21) Application number: 12001106.9
(22) Date of filing: 20.02.2012
(51) Int. Cl.: H01R 43/18, H01R 43/24, H01R 13/504, B29C 45/33, B29C 45/14, B29L 31/36

(54) **Production method for a connector**
Herstellungsverfahren für einen Verbinder
Procédé de production d'un connecteur

(30) Priority: 15.03.2011 JP 2011056338
(43) Date of publication of application: 19.09.2012
(73) Proprietor: Sumitomo Wiring Systems, Ltd., Yokkaichi-city, Mie 510-8503 (JP)
(72) Inventor: Sakamoto, Shinichi, Yokkaichi-city Mie 510-8503 (JP); Tate, Takuya, Yokkaichi-city Mie 510-8503 (JP)
(74) Representative: Müller-Boré & Partner Patentanwälte PartG mbB

(56) References cited:
- DE-A1- 10 009 652
- JP-A- 2009 032 500
- US-A1- 2008 000 668

## Description

The present invention relates to a production or molding method for a device connector.

A device connector to be connected to a device such as a motor installed in an electric vehicle or a hybrid vehicle is, for example, known from patent JP 5194609 B. This device connector includes a plurality of metal busbars for connecting device-side terminals provided in the device and wire-side terminals provided on power feeding wires, and a molded resin portion covering these busbars.

Since insert molding is performed with the plurality of busbars bent into complicated shapes arranged side by side in the above device connector, a demolding structure for the molded resin portion becomes complicated and suitable boring cannot be performed on the molded resin portion. Thus, voids (small clearances) may be produced in a thick part of the molded resin portion, and cracks may be formed due to the voids and the waterproof property of the device connector may be reduced. Accordingly, it is being studied to suppress the formation of voids in the molded resin portion by forming a primary molded article by primary molding to cover parts of the respective busbars by a primary molded portion and further covering the primary molded portion by a secondary molded portion.

However, when the primary molded article is set in the secondary molding die and molding resin is injected into the secondary molding die, the secondary molded portion may be formed with the primary molded article inclined due to the influence of an injection pressure of the molding resin. Thus, the secondary molded portion cannot be formed with the respective busbars positioned at proper positions.

DE 100 09 652 A1 discloses a plug housing comprising two halves which enclose a preformed core section that has a plastic shell with a projection. This projection extends up to the inner wall of the molding tool and its end face shows through the finished housing after it has been formed when the mold space has been filled with injected material. An engaging hole is formed in the preformed core section engaging with a pinion of a lateral molding tool for securing the preformed core section.

US 2008/0000668 A1 discloses a resin molded article formed such that a primary molded article, collars and a metal flat plate are molded integrally as inserts in a secondary molded portion. A rib extends in a longitudinal direction along a surface of the primary molded article that is adjacent to a surface facing a gate, but not a terminal surface. Supports are provided intermittently along the longitudinal direction on a cavity inner surface of a molding die for supporting the rib. The primary molded article is reinforced by the rib, and is not likely to be deformed by resin injected from the gate and is not likely to be displaced.

The present invention was completed in view of the above situation and an object thereof is to improve production of a device connector.

This object is solved according to the invention by the features of the independent claim 1. Preferred embodiments of the invention are subject of the dependent claim 2. Accordingly, the formation of a molded resin portion with a primary molded article inclined and/or the formation of voids in the molded resin portion is suppressed.

According to one aspect of the invention, there is provided a device connector in which one or more conductors to be connected to device-side terminals provided in a device are made integral by a molded resin portion, comprising: a primary molded article in which the one or more conductors are made integral by a primary molded portion made of synthetic resin; a metal plate to be attached and fixed to the device; and a secondary molded portion made of synthetic resin and integrally forming the primary molded article and the metal plate; wherein: the molded resin portion comprises the primary molded portion and the secondary molded portion; the secondary molded portion is formed by a secondary molding die including both first and second dies which are opened in a first direction and at least one slide die which is opened in a second direction intersecting the first direction; and one or more tightly holding portions arranged to intersect with an injection direction, in which molding resin for forming the secondary molded portion is injected, and adapted to tightly hold the slide die are provided on the primary molded portion before the secondary molded portion is formed.

According to the invention, two tightly holding portions are provided to substantially face each other in the injection direction on the primary molded portion before the secondary molded portion is formed.

According to a further particular embodiment of the invention, there is provided a device connector in which a plurality of metal conductors connected to device-side terminals provided in a device are made integral by a molded resin portion, comprising a primary molded article in which the plurality of conductors are made integral by a primary molded portion made of synthetic resin; a metal plate to be attached and fixed to the device; and a secondary molded portion made of synthetic resin and integrally forming the primary molded article and the metal plate; wherein the molded resin portion is composed of the primary molded portion and the secondary molded portion; the secondary molded portion is formed by a secondary molding die including both upper and lower dies which are opened in a vertical direction and a slide die which is opened in a lateral direction; and a pair of tightly holding portions arranged to intersect with an injection direction, in which molding resin for forming the secondary molded portion is injected, and adapted to tightly hold the slide die are provided to face each other in the injection direction on the primary molded portion before the secondary molded portion is formed.

According to the thus constructed device connector, the formation of voids in the molded resin portion formed to be thick by one molding can be suppressed since the molded resin portion can be formed in separate steps for forming the primary molded portion and the secondary molded portion. Further, in forming the secondary molded portion, the pair of tightly holding portions of the primary molded portion tightly hold the slide die, whereby the inclination of the primary molded article caused by an injection pressure of molding resin for forming the secondary molded portion can be suppressed. This enables the secondary molded portion to be formed with the respective conductors positioned at proper positions.

According to the invention, at least one nut accommodating portion for at least partly accommodating a nut to be threadably engaged with a fastening bolt to be fastened to the conductor and at least one escaping recess communicating with the nut accommodating portion and adapted to allow the fastening bolt threadably engaged with and penetrating through the nut to escape are be formed in the molded resin portion by the slide die.

The escaping recess is formed to include the one or more tightly holding portions.

A nut accommodating portion for accommodating a nut to be threadably engaged with a fastening bolt to be fastened to the conductor and an escaping recess communicating with the nut accommodating portion and adapted to allow the fastening bolt threadably engaged with and penetrating through the nut to escape is formed in the molded resin portion by the slide die; and the escaping recess may be formed to include the pair of tightly holding portions.

Generally, the nut accommodating portion is formed in conformity with the width of the nut and the escaping recess is formed in conformity with the outer diameter of a shaft of the fastening bolt. Thus, the escaping recess is formed to be narrower than the nut accommodating portion in the lateral direction. According to the above construction, a pair of facing surfaces forming the escaping recess include the pair of tightly holding portions. Thus, as compared with the case where a pair of facing surfaces forming the nut accommodating portion include the pair of tightly holding portions, the slide die can be held by the tightly holding portions of the primary molded portion without increasing the width of the primary molded portion in the lateral direction. This can prevent the primary molded portion from being thickened, thereby suppressing the formation of voids in the primary molded portion.

A fastening portion of the conductor to which the fastening bolt is to be fastened is arranged at the upper end of the nut accommodating portion.

The escaping recess includes a bottom wall connecting the pair of tightly holding portions; and the slide die is tightly held from upper and lower sides by the fastening portion of the conductor and the bottom wall.

A fastening portion of the conductor to which the fastening bolt is to be fastened is arranged at the upper end of the nut accommodating portion; the escaping recess includes a bottom wall connecting the pair of tightly holding portions; and the slide die is tightly held from upper and lower sides by the fastening portion of the conductor and the bottom wall.

According to this construction, vertical displacements of the primary molded portion can be prevented since the primary molded article tightly holds the slide die also with respect to the vertical direction.

The present invention is preferably embodied to have the following constructions.

The primary molded article may be formed such that one or more cores individually formed for the one or more respective conductors are provided preferably arranged substantially side by side in a lateral direction.

The primary molded article may be formed such that a plurality of cores individually formed for the respective conductors are arranged side by side in a lateral direction.

According to this construction, the primary molded portion is formed by arranging the plurality of cores in the lateral direction. Thus, the lengths of the respective cores in the lateral direction in the primary molded portion can be further reduced and the formation of voids in the primary molded portion can be further suppressed.

According to another aspect of the invention, there is provided a production or molding method for producing a device connector, in particular according to the above aspect of the invention or a particular embodiment thereof, in which one or more conductors to be connected to device-side terminals provided in a device are made integral by a molded resin portion comprising a primary molded portion and a secondary molded portion, comprising the following steps: molding a primary molded article in which the one or more conductors are made integral by a primary molded portion of synthetic resin; molding a secondary molded portion made of synthetic resin to integrally form the primary molded article and a metal plate to be attached and fixed to the device, wherein the secondary molded portion is formed by a secondary molding die including both first and second dies which are opened in a first direction and at least one slide die which is opened in a second direction intersecting the first direction; while tightly holding the slide die by means of one or more tightly holding portions arranged to intersect with an injection direction, in which molding resin for forming the secondary molded portion is injected, and provided on the primary molded portion before the secondary molded portion is formed.

The slide die is held by means of two tightly holding portions which are provided to substantially face each other in the injection direction on the primary molded portion before the secondary molded portion is formed.

According to the invention, the method further comprises forming in the molded resin portion by the slide die at least one nut accommodating portion for at least partly accommodating a nut to be threadably engaged with a fastening bolt to be fastened to the conductor and at least one escaping recess communicating with the nut accommodating portion and adapted to allow the fastening bolt threadably engaged with and penetrating through the nut to escape.

The escaping recess is formed to include the one or more tightly holding portions.

A fastening portion of the conductor to which the fastening bolt is to be fastened is formed at the upper end of the nut accommodating portion.

The escaping recess is formed with a bottom wall connecting the pair of tightly holding portions; and the slide die preferably may be tightly held from upper and lower sides by the fastening portion of the conductor and the bottom wall.

The present invention may preferably embodied as follows.

The primary molded article may be formed such that one or more cores individually formed for the one or more respective conductors are provided preferably arranged substantially side by side in a lateral direction.

According to the above, it is possible to suppress the formation of a molded resin portion with a primary molded article inclined and suppress the formation of voids in the molded resin portion.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a terminal block according to an embodiment,
FIG. 2 is a front view of the terminal block according to the embodiment,
FIG. 3 is a plan view of the terminal block according to the embodiment,
FIG. 4 is a perspective view showing a state where a shielding shell is mounted on the terminal block according to the embodiment,
FIG. 5 is a section along V-V of FIG. 2,
FIG. 6 is a section along VI-VI of FIG. 3,
FIG. 7 is a section along VII-VII of FIG. 2,
FIG. 8 is a perspective view showing a state where three cores are arranged in contact,
FIG. 9 is a plan view showing the state where the three cores are arranged in contact,
FIG. 10 is a plan view showing a state where the three cores are arranged while being spaced apart,
FIG. 11 is a side view of the left core,
FIG. 12 is a section showing a state where the cores are held by upper and lower dies and a slide die, and
FIG. 13 is a section showing a state where a secondary molded portion is formed in the upper and lower dies and the slide die.

### <Embodiment>

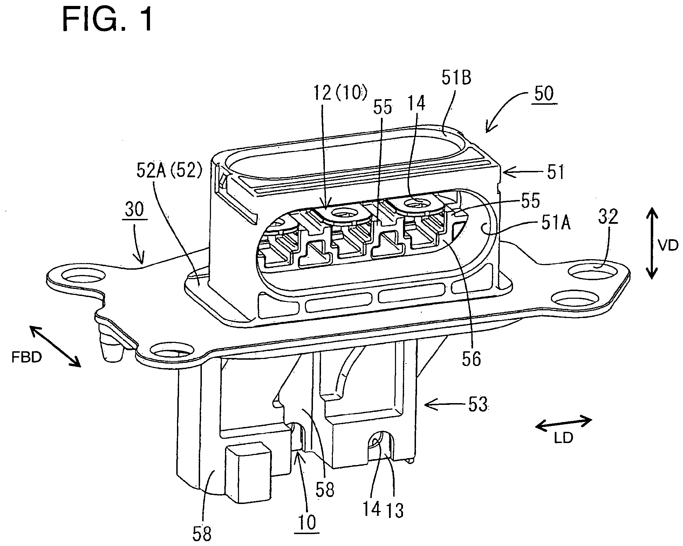

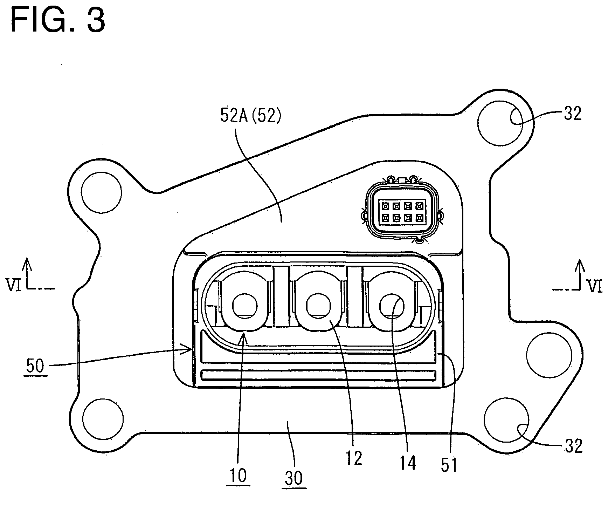

One particular embodiment of the present invention is described with reference to FIGS. 1 to 13.

In this embodiment, a terminal block to be attached to a metal motor case (not shown) housing a motor (as an example of a "device") inside is illustrated as an example of a device connector. As shown in FIG. 1, this terminal block includes a metal plate 30 to be attached and fixed to the motor case, a connector housing 50 molded to be integral to the metal plate 30, and one or more (e.g. three) conductive plates 10 held in the connector housing 50 while penetrating through the metal plate 30 in a plate thickness direction TD. Note that the connector housing 50 particularly corresponds to a molded resin portion and the one or more conductive plates 10 particularly correspond to conductors.

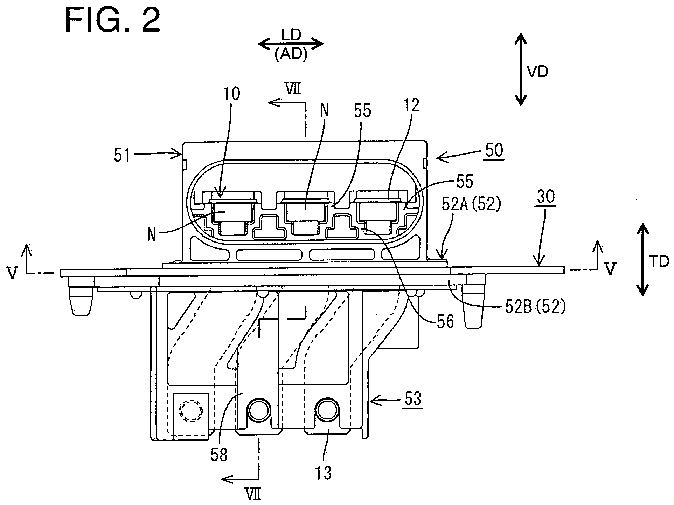

One or more one ends (first ends) of the conductive plates 10 are to be connected (particularly bolt-fastened) to one or more, particularly a plurality of unillustrated device-side busbars provided in or at the motor case for electrical connection. On the other hand, in a power supply device for supplying power such as an inverter, one or more, particularly a plurality of wires are arranged to substantially extend toward the motor case and an unillustrated wire-side connector is provided at end portions of these one or more wires. One or more wire-side terminals connected to respective wire ends are provided in this wire-side connector, and these one or more wire-side terminals are connected (particularly bolt-fastened) to the one or more other ends of the respective conductive plates 10 for electrical connection. Note that, in the following description, a vertical direction VD is a vertical direction in FIG. 2 and a lateral direction LD is a lateral direction in FIG. 2.

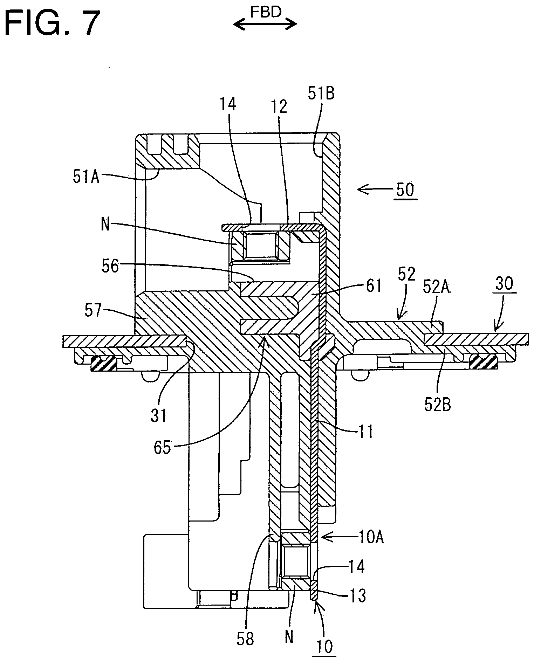

The (particularly each) conductive plate 10 is formed by, after a conductive (particularly metal) plate with good electrical conductivity is punched or cut into a specified (predetermined or predeterminable) shape particularly by a press, performing a specified (predetermined or predeterminable) bending process on the punched or cut conductive (metal) plate as shown in FIG. 7. The conductive plate 10 includes a terminal main portion 11 constituting or forming part of a main part of the conductive plate 10, at lest one wire-side fastening portion 12 (as an example of a "fastening portion") substantially extending laterally or forward from the lateral or upper end of the terminal main portion 11, and at least one device-side fastening portion 13 provided at a lower end portion of the terminal main portion. The terminal main portion 11 particularly is formed to be longer than the wire-side fastening portion 12.

As shown in FIG. 2, the plurality of (e.g. three) conductive plates 10 particularly are arranged substantially side by side in the lateral direction. Further, the terminal main portions 11 particularly are slightly cranked in the lateral direction LD at intermediate positions. The wire-side fastening portions 12 and the device-side fastening portions 13 are each formed with a bolt insertion hole 14 through which an unillustrated fastening bolt is at least partly insertable.

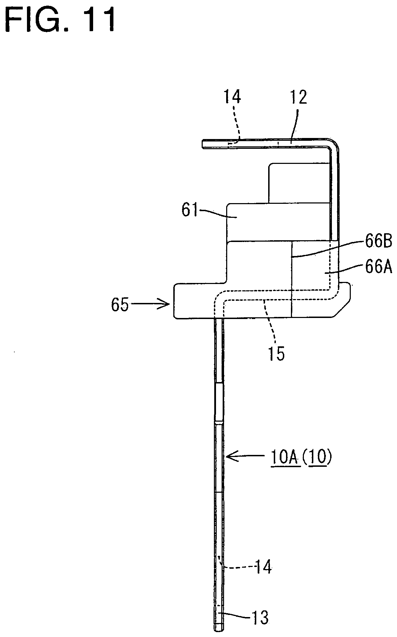

The terminal main portion 11 of the conductive plate 10A (particularly arranged in the center or intermediate position out of the three conductive plates 10) substantially extends in the vertical direction VD and/or is substantially flat as shown in FIG. 7. As shown in FIG. 11, the lateral terminal main portions 11, 11 (preferably of the both conductive plates 10B, 10B located at the opposite left and right sides out of the three conductive plates 10) include each a folded portion 15 bent forward to face the wire-side fastening portion 12 at an intermediate part (particularly at a substantially vertically central part) of the terminal main portion 11, and the front end of this folded portion 15 is bent downward particularly substantially at the same position as the front end of the wire-side fastening portion 12.

The metal plate 30 particularly is made of a metal flat plate material as a base material and includes an opening 31 formed to penetrate in a plate thickness direction TD of the plate material. The connector housing 50 includes a wire-side fitting portion 51 arranged to vertically penetrate through the opening 31, molded to be integral to the metal plate 30 and arranged above the metal plate 30, a (particularly substantially plate-like) flange 52 arranged at the height position of the metal plate 30 and bulging out sideways, and a device-side fitting portion 53 arranged below the metal plate 30.

As shown in FIG. 1, the wire-side fitting portion 51 particularly substantially is in the form of a box long in the lateral direction and includes a front end opening 51A (as a particular first opening) which is open in one direction (e.g. forward) and an upper end opening 51B (as a particular second opening) which is open in another direction (e.g. upward). The unillustrated wire-side connector is at least partly fittable or insertable into the wire-side fitting portion 51 through the front end opening 51A of the wire-side fitting portion 51.

As shown in FIG. 2, one or more (e.g. three) nut accommodating portions 55 are formed (particularly substantially side by side in the lateral direction LD) in the wire-side fitting portion 51. These one or more (e.g. three) nut accommodating portions 55 are respectively open to two sides such as forward and upward. Further, all the three nut accommodating portions 55 is/are arranged to substantially face (particularly forward) through the front or first end opening 51A and substantially face (particularly upward) through the upper or second end opening 51B. One or more nuts N press-fitted through the front end opening 51A from front particularly are so accommodated in the nut accommodating portions 55 that the axis lines of the nuts N are aligned with the vertical direction VD.

The wire-side fastening portions 12 of the conductive plates 10 are arranged to close the upper end openings of the nut accommodating portions 55 as shown in FIGS. 1 and 2. Further, as shown in FIG. 7, each conductive plate 10 is arranged to penetrate through the opening 31 in the vertical direction VD and so held in the connector housing 50 that the wire-side fastening portion 12 is substantially arranged around the bolt insertion hole 14 and at least partly exposed forward and/or upward in the wire-side fitting portion 51 and, on the other hand, the device-side fastening portion 13 is substantially arranged around the bolt insertion hole 14 and at least partly exposed backward at the lower end portion of the device-side fitting portion 53. Each wire-side fastening portion 12 is at least partly exposed to the outside through the upper end opening 51B of the wire-side fitting portion 51. That is, the upper end opening 51B of the wire-side fitting portion 51 particularly is or may be used as a service hole used to at least partly insert a tool or the like for a bolt fastening operation. The wire-side terminal is substantially placed on the wire-side fastening portion 12 and the tool is inserted inside through the upper end opening 51B to threadably engage the fastening bolt with the nut N, whereby the conductive plate 10 and the wire-side terminal are electrically connected. Note that an unillustrated service cover is mounted on or to the upper end opening 51B of the wire-side fitting portion 51 after bolt fastening, thereby closing the upper end opening 51B.

An escaping recess 56 for allowing a leading end part of the fastening bolt penetrating through the nut N to escape when the fastening bolt is fastened to the nut N is provided below each nut accommodating portion 55. The escaping recess 56 particularly is formed to be narrower than the nut accommodating portion 55 in the lateral direction LD and integrally or unitarily formed with the nut accommodating portion 55 by a slide die 92 to be described later.

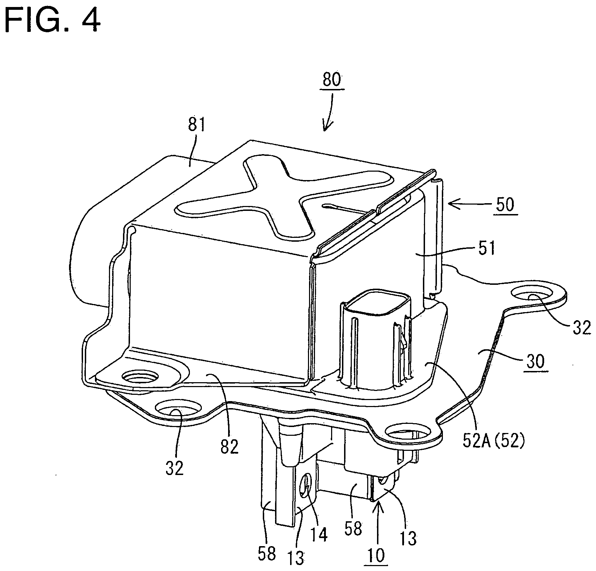

As shown in FIG. 4, a metal shielding shell 80 at least partly covering the wire-side fitting portion 51 except the rear surface is mounted on the wire-side fitting portion 51. This shielding shell 80 is formed by, after a conductive (particularly metal) plate with good electrical conductivity is punched or cut into a specified (predetermined or predeterminable) shape particularly by a press, performing a specified (predetermined or predeterminable) bending process on the punched or cut conductive (metal) plate. The shielding shell 80 includes a (particularly braided) fixing portion 81 having a laterally long cylindrical shape and adapted to crimp a braided wire, which is provided to collectively cover shielded conductive paths of the wire-side connector, against a crimp ring, and a fixing piece 82 for fixing the shielding shell 80 to the metal plate 30 and electrically connecting the shielding shell 80 and the metal plate 30.

Since the flange 52 particularly is formed to be integral to the metal plate 30 in a range not reaching an outer peripheral edge portion of the metal plate 30, the outer peripheral edge portion of the metal plate 30 particularly is exposed. Further, a wire-side flange 52A at a side of the wire-side fitting portion 51 is formed to extend in the lateral direction LD and backward direction, and a device-side flange 52B at a side of the device-side fitting portion 53 is formed to substantially cover a surface of the metal plate 30 at the side of the device-side fitting portion 53.

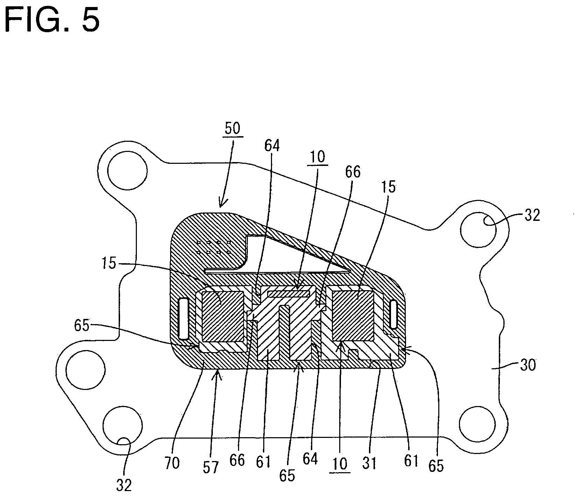

The opening 31 particularly has a substantially trapezoidal shape. Further, the folded portions 15 of the conductive plates 10 at the lateral (left and/or right) side(s) particularly out of the three conductive plates 10 are arranged in the opening 31. On the other hand, a thick portion 57 as a thick resin layer is formed particularly from a lower end portion of the wire-side fitting portion 51 to an upper end portion of the device-side fitting portion 53 as shown in FIGS. 5 to 7. That is, the one or more (e.g. three) conductive plates 10 having a complicated shape are arranged to penetrate through the opening 31 of the metal plate 30 in this thick portion 57.

Further, one or more, particularly a plurality of mounting holes 32 are formed in the outer peripheral edge portion of the metal plate 30. Unillustrated one or more fixing bolts or rivets are at least partly inserted through these mounting holes 32 and fastened to the motor case, whereby the terminal block can be attached and fixed to the motor case.

The device-side fitting portion 53 is housed into the motor case when the terminal block is fixed to the motor case. Further, as shown in FIG. 1, one or more (e.g. three) nut accommodating portions 58 are formed in the device-side fitting portion 53. Specifically, out of these nut accommodating portions 58, the nut accommodating portion 58 located in the center or at an intermediate position is arranged behind the other nut accommodating portions 58. In the nut accommodating portions 58 of the device-side fitting portion 53, the fastening bolts are threadably engaged with respective nuts N to electrically connect the conductive plates 10 and the device-side busbars similar to the nut accommodating portions 55 of the wire-side fitting portion 51. In this way, the wire-side terminals and the device-side busbars are electrically connected using the conductive plates 10 as intermediate terminals.

The connector housing 50 particularly is composed of a primary molded portion 61 made e.g. of synthetic resin and molded to be integral or unitary to the one or more (e.g. three) conductive plates 10 by primary molding and a secondary molded portion 70 made e.g. of synthetic resin and molded to be integral or unitary to the primary molded portion 61 by secondary molding, and particularly formed in two separate processes.

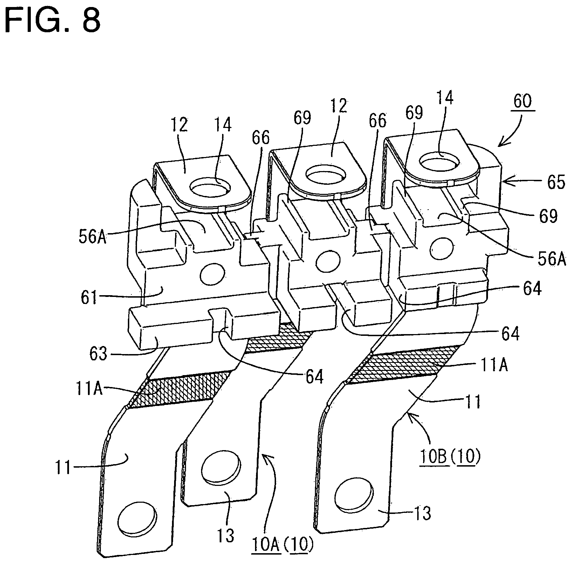

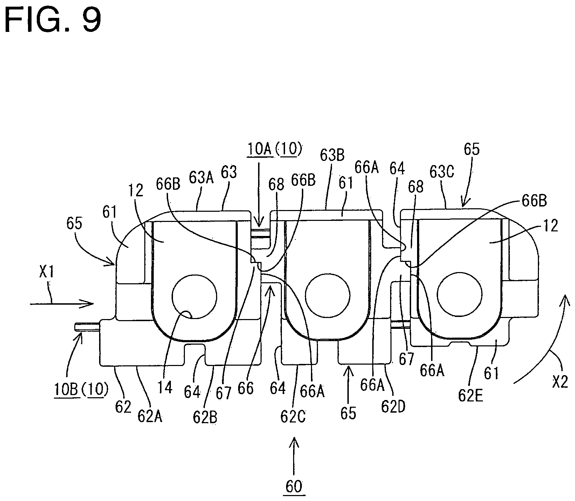

A primary molded article 60 formed by primary molding is composed of or comprises the one or more (e.g. three) conductive plates 10 and the primary molded portion 61 made of synthetic resin and covering parts of the terminal main portions 11 of the (three) conductive plate(s) 10. As shown in FIGS. 8 and 9, the (three) conductive plate(s) 10 is/are held in the primary molded portion 61 while particularly being arranged at equal intervals in the lateral direction.

As shown in FIG. 8, the primary molded portion 61 particularly is roughly in the form of a block having a substantially rectangular shape longer in the lateral direction LD when viewed from above, and at least partly covers substantially vertical central or intermediate parts of the terminal main portions 11 of the respective conductive plates 10 (particularly substantially over the entire circumference). The terminal main portion 11 of the conductive plate 10A located in the center or intermediate position is covered while vertically penetrating through a rear part of the primary molded portion 61, and the terminal main portions 11 of the conductive plates 10B located at the lateral (left and/or right) side(s) is/are covered in the rear part of the primary molded portion 61 and the folding portion(s) 15 thereof is/are covered in a lower part of the primary molded portion 61 as shown in FIG. 11. In other words, as shown in FIGS. 1 and 11, the primary molded portion 61 particularly at least partly covers cranked parts of the terminal main portions 11 of the respective conductive plates 10, and these covered parts are subject to an injection pressure of molding resin injected from the lateral (e.g. left) side. Note that one or more sealing portions 11A where an adhesive is to be applied are provided below the parts of the terminal main portions 11 of the respective conductive plates 10 covered by the primary molded portion 61 and/or adhere to the secondary molded portion 70 to prevent the entrance of water or the like into the connector housing 50 when the secondary molded portion 70 is formed.

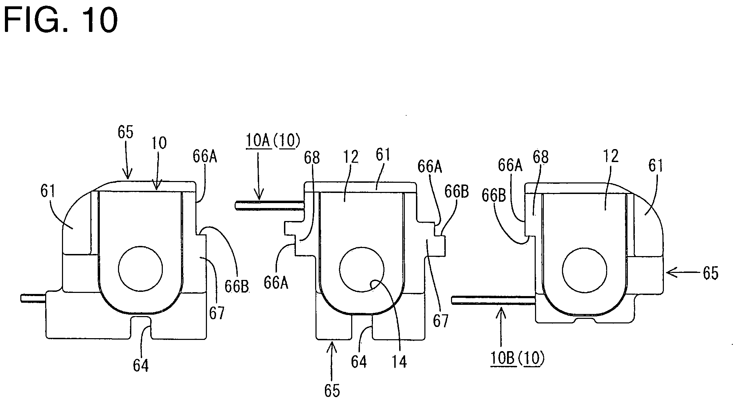

Further, one or more resin entering spaces 64 into which molding resin can at least partly enter when the secondary molded portion 70 is formed are formed to extend in forward and backward directions FBD (directions crossing an arrangement direction AD of the conductive plates 10) in a front end surface 62 and a rear end surface 63 of the primary molded portion 61 extending (particularly substantially straight) in the lateral direction LD as shown in FIGS. 9 and 10. These resin entering spaces 64 particularly have each a substantially rectangular plan view and/or are at least partly formed between the adjacent conductive plates 10 in the primary molded portion 61, in a part corresponding to the left conductive plate 10B in the primary molded portion 61 and/or in a part corresponding to the conductive plate 10A located in the center or intermediate position in the front end surface of the primary molded portion 61. Further, the resin entering spaces 64 provided between the adjacent conductive plates 10 particularly are formed to be longer in forward and backward directions FBD than the resin entering spaces 64 provided in correspondence with the conductive plates 10. The resin entering spaces 64 at least partly provided between the adjacent conductive plates 10 are so formed that intermediate or substantially central parts (contact portions 66) of the primary molded portion 61 in forward and backward directions FBD particularly are left at the back ends of the resin entering spaces 64. That is, a straight part of the front end surface 62 of the primary molded article 60 substantially extending in the lateral direction LD is divided by the resin entering spaces 64 as shown in FIG. 9, with the result that the front end surface 62 is composed of straight parts 62A, 62B, 62C, 62D and 62E substantially extending in the lateral direction LD one after another. Thus, the lengths of the respective straight parts 62A, 62B, 62C, 62D and 62E substantially extending in the lateral direction LD one after another are shorter than the length of the straight part continuously substantially extending in the lateral direction LD when the front end surface 62 of the primary molded article 60 is not divided by the resin entering spaces 64.

Similar to the front end surface 62, a substantially straight part of the rear end surface 63 of the primary molded article 60 substantially extending in the lateral direction LD particularly is also divided by the resin entering spaces 64, with the result that the rear end surface 63 is composed of substantially straight parts 63A, 63B and 63C substantially extending in the lateral direction LD one after another. The lengths of the respective straight parts 63A, 63B and 63C substantially extending in the lateral direction LD one after another particularly are shorter than the length of the substantially straight part continuously substantially extending in the lateral direction LD when the rear end surface 63 of the primary molded article 60 is not divided by the resin entering spaces 64.

Further, as shown in FIG. 9, two or more (e.g. three) cores 65, 65, 65 particularly are in contact in the lateral direction LD in the primary molded article 60.

The respective cores 65, 65, 65 can be divided at the resin entering spaces 64 provided between the adjacent conductive plates 10, 10, and the adjacent cores 65, 65 particularly are connected in the lateral direction LD by the contact portion 66 formed at the back ends of the resin entering spaces 64. In other words, the adjacent cores 65, 65 particularly are in contact in the lateral direction LD via the contact portion 66.

The contact portion 66 is composed of or comprises a first linking portion 67 substantially extending laterally (e.g. to the right) from the primary molded portion 61 of the core 65 located on the lateral (left) side and a second linking portion 68 substantially extending laterally (e.g. to the left) from the primary molded portion 61 of the core 65 located on the opposite lateral (right) side.

The respective linking portions 67, 68 particularly are at an angle different from 0° or 180°, preferably substantially perpendicular to an injection direction (lateral direction LD) and particularly include each two first surfaces (as an example of a first intersecting surface") 66A displaced in the lateral direction LD and a second surface (as an example of a "second intersecting surface") 66B located between the two first surfaces 66A, 66A and at an angle different from 0° or 180°, preferably substantially perpendicular to the first surfaces 66A, and the two first surfaces 66A, 66A and the second surface 66B particularly are connected in a cranked manner. The two first surfaces 66A, 66A of the linking portion 67 and the two first surfaces 66A, 66A of the linking portion 68 particularly are in surface contact in the injection direction, and/or the second surface 66B of the linking portion 67 and the second surface 66B of the linking portion 68 particularly are in surface contact in a direction at an angle different from 0° or 180°, preferably substantially perpendicular to the injection direction. That is, parts of the respective linking portions 67, 68 held in surface contact with each other form a cranked shape obtained by connecting the two surfaces 66A and the second surface 66B as shown in FIG. 9, and the adjacent cores 65, 65 particularly are held in surface contact with each other in forward and backward directions FBD and lateral direction LD.

One or more, particularly a pair of tightly holding portions 69, 69 (particularly substantially facing each other in the lateral direction LD and) standing upward are provided on the top of each core 65 as shown in FIG. 8. The (pairs of) tightly holding portion(s) 69 substantially extend(s) in forward and backward directions FBD, and tightly hold(s) the slide die 92 for forming the nut accommodating portions 55 and the escaping recesses 56 of the connector housing 50 (particularly from substantially opposite lateral sides) when secondary molding is performed. A bottom wall 56A connecting the lower ends of the tightly holding portions 69, 69 is provided adjacent to the tightly holding portion(s) 69, 69, particularly at least partly between the pair of tightly holding portions 69, 69. A length from the bottom walls 56A to the wire-side fastening portions 12 arranged above the nut accommodating portions 55 particularly is set to be substantially equal to a length which is the sum of the heights of the nut accommodating portions 55 and the escaping recesses 56 in the connector housing 50, and/or the wire-side fastening portions 12 and the bottom walls 56A tightly hold the slide die 92 from opposite upper and lower sides when secondary molding is performed.

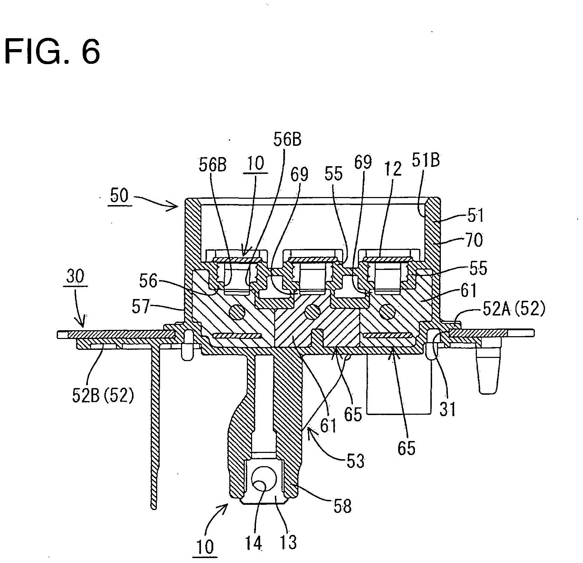

The secondary molded portion 70 formed by secondary molding is such that the primary molded portion 61 of the primary molded article 60 penetrates through the opening 31 of the metal plate 30 in forward and backward directions FBD as shown in FIGS. 5 and 6, and/or constitutes or forms part of the above connector housing 50 together with the primary molded portion 61. At the time of secondary molding, molten molding resin to be molded into the secondary molded portion 70 at least partly enters the resin entering spaces 64 of the primary molded article 60 and substantially flows to the both upper and lower surfaces of the metal plate 30, whereby the primary molded article 60 and the metal plate 30 are integrally formed. That is, the formation of voids in the thick portion 57 of the connector housing 50 is suppressed or reduced by arranging the primary molded portion 61 of the primary molded article 60 in the thick portion 57 of the connector housing 50 and forming the thick portion 57, which is thickest in the connector housing 50, in the primary molded portion 61 and the secondary molded portion 70. This can prevent crack formation in the thick portion 57 due to voids and a reduction in the waterproof property of the terminal block. Further, since the primary molded article 60 particularly is formed as three separate parts for the respective conductive plates 10, the formation of voids in the primary molded portion 61 can be further suppressed.

The terminal block of this embodiment is structured as described above. Next, a production method of the secondary molded portion 70 and functions and effects thereof are described.

First, the respective cores 65, 65, 65 are set one next to another in the lateral direction LD in a lower die 91 of first and second (upper and lower) dies 90, 91, which are opened (particularly substantially in the vertical direction VD) for secondary molding, while being held in surface contact at the respective contact portions 66. At this time, since the adjacent cores 65, 65 can be set in the lower die 91 only by bringing the respective cranked linking portions 67, 68 into surface contact in forward and backward directions FBD and lateral direction LD, a process of setting the cores 65 in the lower die 91 can be simplified as compared with the case where the linking portions are engaged with each other such as by mating engagement. Further, as compared with the case where the respective linking portions 67, 68 are formed as projections and recesses, a die for forming the primary molded portion 61 can be simplified and production cost of the die for primary molding can be reduced.

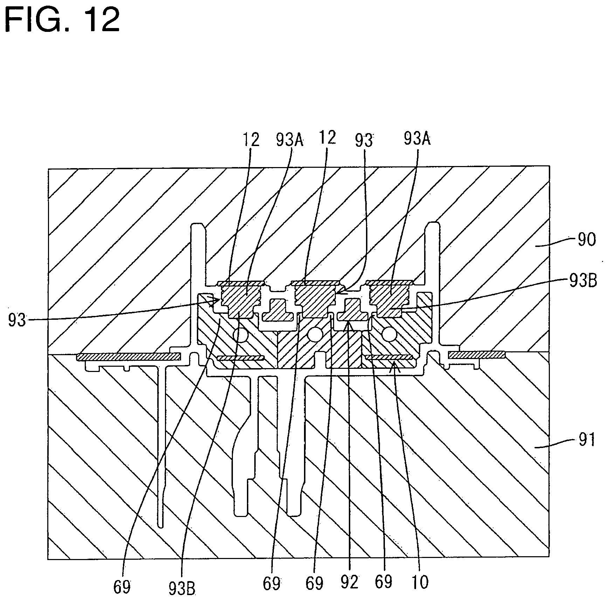

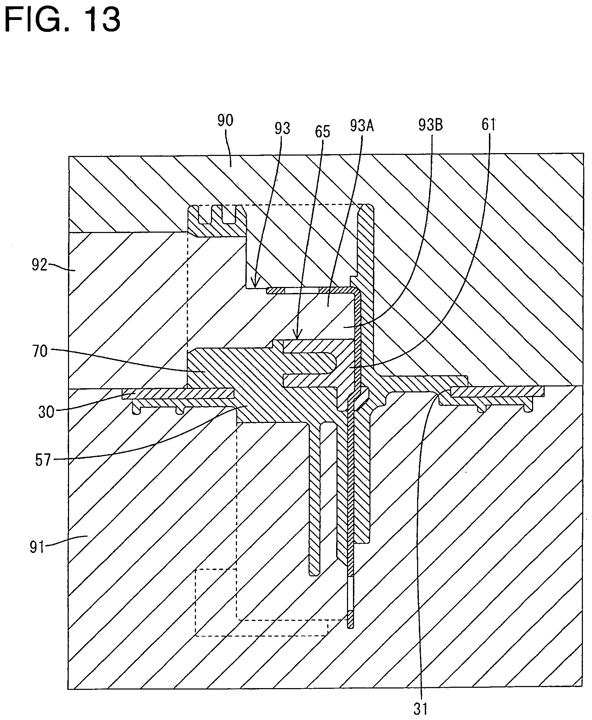

When all the cores 65 are set in the lower die 91, the slide die 92 is inserted from front into spaces substantially enclosed by the pairs of tightly holding portions 69, 69 of the respective cores 65, 65, 65, the wire-side fastening portions 12 and the bottom walls 56A and the die is so clamped that the upper and lower dies 90, 91 particularly sandwich all the cores 65 from the upper and lower sides as shown in FIG. 13. At this time, the slide die 92 is so assembled as to be tightly held from the lateral (left and right) sides by the one or more, particularly the pairs of tightly holding portions 69, 69 and/or from the upper and lower sides by the wire-side fastening portions 12 and the bottom walls 56A. Specifically, as shown in FIGS. 12 and 13, the slide die 92 includes one or more (e.g. three) molding pins 93 each composed of or comprising a nut accommodating portion forming portion 93A and an escaping recess forming portion 93B narrower than the nut accommodating portion forming portion 93A in the lateral direction LD and the escaping recess forming portions 93B particularly are tightly held from the lateral (left and/or right) sides by the pairs of the tightly holding portions 69, 69 of the primary molded portion 61.

Subsequently, the secondary molded portion 70 is formed by injecting molten molding resin, for example, from the back side to the front side of the plane of FIG. 13 from an unillustrated gate provided at a lateral side of the upper and lower dies 90, 91, thereby forming the connector housing 50 as shown in FIG. 13. At this time, the molding resin particularly is received by the left surface of the primary molded portion 61 in the respective cores 65, 65, 65, and the respective cores 65, 65, 65 try to move in an injection direction X1 of the molding resin and in a counterclockwise rotational direction X2 about the centers of the axis lines of the conductive plates 10 as shown in FIG. 9. However, since the respective cores 65, 65, 65 particularly are connected in surface contact with each other by the contact portions 66 (first surfaces 66A) according to this embodiment, all the cores 65 become integral, thereby resisting the injection pressure of the molding resin and suppressing displacements of the respective cores 65, 65, 65 in the injection direction. Further, also against a rotational force in a clockwise direction opposite to the direction X2, the contact portions 66 (second surfaces 66B) particularly come into surface contact in forward and backward directions FBD, thereby being able to restrict clockwise rotational forces about the axis centers of the conductive plates 10 and suppress displacements of the respective cores 65, 65, 65.

Further, since the respective cores 65, 65, 65 particularly tightly hold the slide die 92 in vertical and lateral directions using the pairs of tightly holding portions 69, 69, the wire-side fastening portions 12 and the bottom walls 56A, displacements of the respective cores 65, 65, 65 in the injection direction particularly can be further suppressed and vertical displacements thereof can also be suppressed. This can suppress displacements of the respective conductive plates 10 resulting from displacements of the respective cores 65, 65, 65. Note that the pairs of the tightly holding portions 69, 69 of the respective cores 65, 65, 65 in the primary molded portion 61 form pairs of inner walls 56B, 56B facing each other in the escaping recesses 56 of the connector housing 50 together with the secondary molded portion 70 as shown in FIG. 6.

The secondary molded portion 70 formed as described above is cured by being cooled, and forms the connector housing 50 together with the primary molded portion 61. In this cooling process, the secondary molded portion 70 is cured and shrinks to squash the part of the primary molded portion 61 covered thereby. However, in this embodiment, the straight parts of the front and rear end surfaces 62, 63 of the primary molded portion 61 particularly are divided by the resin entering spaces 64, and the lengths of the parts of the secondary molded portion 70 individually covering the respective straight parts 62A, 62B, 62C, 62D, 62E, 63A, 63B and 63C of the respective cores 65 are short. Thus, as compared with the case where the primary molded portion is formed with no resin entering spaces 64, the amount of shrinkage of the secondary molded portion 70 individually covering the respective straight parts 62A, 62B, 62C, 62D, 62E, 63A, 63B and 63C of the respective cores 65, 65, 65 particularly can be made smaller. In this way, the squashing of the primary molded portion 61 by the secondary molded portion 70 can be suppressed. Further, since the resin entering spaces 64 substantially extending in forward and backward directions FBD particularly are formed to be larger between the adjacent cores 65, 65 than in the other parts, it is possible to further effectively divide the primary molded portion 61 and further suppress the influence of cure shrinkage in the secondary molded portion 70.

Further, since the escaping recess forming portions 93B of the slide die 92 particularly are tightly held by the pairs of tightly holding portions 69, 69 upon forming the secondary molded portion 70 in this embodiment, the width of the primary molded portion 61 in the lateral direction LD can be shortened and the thickening of the primary molded portion 61 in the lateral direction LD can be suppressed as compared with the case where pairs of tightly holding portions for tightly holding the nut accommodating portion forming portions 93A for forming the nut accommodating portions 55 are provided. This can further suppress the formation of voids in the primary molded portion 61.

Accordingly, to suppress the formation of a molded resin portion with a primary molded article inclined and suppress the formation of voids in the molded resin portion, a terminal block in which one or more, particularly a plurality of terminals or (particularly metal) conductive plates 10 to be connected to respective device-side terminals or busbars provided in a device such as a motor are made integral by a connector housing 50 includes a primary molded article 60 in which the one or more, particularly the plurality of terminals or conductive plates 10 are made integral by a connector housing 50; a metal plate 30 to be attached and fixed to a motor case; and a secondary molded portion 70 integrally forming the primary molded article 60 and the metal plate 30. The secondary molded portion 70 is formed by a secondary molding die including both upper and lower dies 90, 91 and a slide die 92. Pairs of tightly holding portions 69, 69 for tightly holding the slide die 92 are provided on the primary molded portion 61 before the secondary molded portion 70 is formed.

### <Other Embodiments>

The present invention is not limited to the above described and illustrated embodiment. For example, the following embodiments are also included in the technical scope of the present invention.
(1) Although the primary molded article 60 is divided into the three cores 65 in the above embodiment, the present invention is not limited to such a mode. For example, the primary molded article 60 may not be divided.
(2) Although the terminal block includes the shielding shell 80 in the above embodiment, the present invention is not limited to such a mode. For example, the present invention may be applied to a terminal block which requires no shielding shell.
(3) Although the connector housing 50 is formed with the primary molded portion 61 penetrating through the opening 31 of the metal plate 30 in the above embodiment, the present invention is not limited to such a mode. For example, the primary molded portion 61 may not penetrate through the opening 31 of the metal plate 30.
(4) Although the three cores are held in contact in the lateral direction by the contact portions 66 in the above embodiment, the present invention is not limited to such a mode. For example, the adjacent cores may be entirely separated by resin entering spaces and may not be in contact.

### LIST OF REFERENCE NUMERALS

- 10:: conductive plate (conductor)
- 12:: wire-side fastening portion (fastening portion)
- 30:: metal plate
- 50:: connector housing (molded resin portion)
- 55:: nut accommodating portion
- 56:: escaping recess
- 56A:: bottom wall
- 60:: primary molded article
- 61:: primary molded portion
- 65:: core
- 69:: tightly holding portion
- 70:: secondary molded portion
- 90:: lower die
- 91:: upper die
- 92:: slide die
- X1:: injection direction

## Claims

1. A production method for producing a device connector in which one or more conductors (10) to be connected to device-side terminals provided in a device are made integral by a molded resin portion (50) comprising a primary molded portion (61) and a secondary molded portion (70), comprising the following steps:
molding a primary molded article (60) in which the one or more conductors (10) are made integral by a primary molded portion (61) of synthetic resin;
molding a secondary molded portion (70) made of synthetic resin to integrally form the primary molded article (60) and a metal plate (30) to be attached and fixed to the device, wherein the secondary molded portion (70) is formed by a secondary molding die including both first and second dies (90, 91) which are opened in a first direction (VD) and at least one slide die (92) which is opened in a second direction (FBD) intersecting the first direction (VD);
while tightly holding the slide die (92) by means of a pair of tightly holding portions (69) arranged to intersect with an injection direction (X1), in which molding resin for forming the secondary molded portion (70) is injected, and provided on the primary molded portion (61) before the secondary molded portion (70) is formed, the pair of tightly holding portions (69) facing each other in the injection direction (X1) and standing upward;
forming in the molded resin portion (50) by the slide die (92) at least one nut accommodating portion (55) for at least partly accommodating a nut to be threadably engaged with a fastening bolt to be fastened to the conductor (10) and at least one escaping recess (56) communicating with the nut accommodating portion (55) and adapted to allow the fastening bolt threadably engaged with and penetrating through the nut to escape,
wherein the slide die (92) includes a molding pin (93) comprising a nut accommodating portion forming portion (93A) and an escaping recess forming portion (93B) narrower than the nut accommodating portion forming portion (93A) in a lateral direction (LD), the escaping recess forming portion (93B) being tightly held from the lateral sides by the pair of tightly holding portions (69),
wherein a fastening portion (12) of the conductor (10) to which the fastening bolt is to be fastened is formed at the upper end of the nut accommodating portion (55),
wherein the escaping recess (56) is formed with a bottom wall (56A) connecting the pair of tightly holding portions (69); and
wherein the slide die (92) is tightly held from upper and lower sides by the fastening portion (12) of the conductor (10) and the bottom wall (56A), the up-down direction being parallel to the first direction (VD).

2. A method according to claim 1, wherein the primary molded article (60) is formed such that one or more cores (65) individually formed for the one or more respective conductors (10) are provided preferably arranged substantially side by side in a lateral direction (LD).

## Patentansprüche

1. Ein Produktionsverfahren zur Produktion eines Geräteverbinders, bei dem ein oder mehrere Leiter (10), die mit geräteseitigen, in einem Gerät bereitgestellten Anschlüssen zu verbinden sind, durch einen gegossenen Harzabschnitt (50) einstückig gemacht werden, der einen primären gegossenen Abschnitt (61) und einen sekundären gegossenen Abschnitt (70) umfasst, das folgende Schritte umfasst:
gießen bzw. formen eines primären gegossenen Artikels (60), in dem der eine oder die mehreren Leiter (10) durch einen primären gegossenen Abschnitt (61) aus Kunstharz einstückig gemacht werden;
gießen bzw. formen eines sekundären, aus Kunstharz bestehenden gegossenen Abschnitt (70), um den primären gegossenen Artikel (60) und eine am Gerät anzubringende und zu befestigende Metallplatte (30) einstückig auszubilden, wobei der sekundäre gegossene Abschnitt (70) durch eine sekundäre Gießform gebildet wird, die Folgendes enthält: beide Gießformen eins und zwei (90, 91), die in einer ersten Richtung (VD) geöffnet werden, und mindestens eine Gleitform (*slide die*) (92), die in einer zweiten Richtung (FBD) geöffnet wird, die die erste Richtung (VD) schneidet;
wobei, während die Gleitform (92) fest gehalten wird mittels eines Paars von festhaltenden Abschnitten (69), das angeordnet ist, um sich mit einer EinspritzRichtung (X1) zu kreuzen, in der zur Bildung des sekundären gegossenen Abschnitts (70) Gießharz eingespritzt wird, und bereitgestellt am primären gegossenen Abschnitt (61) bevor der sekundäre gegossene Abschnitt (70) gebildet ist, das Paar von fest haltenden Abschnitten (69) einander in Einspritzrichtung (X1) zugewandt sind und aufrecht stehen:
bilden im gegossenen Harzabschnitt (50), durch die Gleitform (92), von mindestens einem Mutter aufnehmenden Abschnitt (55), um darin zumindest teilweise eine Mutter aufzunehmen, damit diese mit einer Befestigungsschraube in einen Gewindeeingriff gebracht werden kann, zur Befestigung am Leiter (10), und von mindestens einer Austrittsvertiefung (56), die mit dem Mutter aufnehmenden Abschnitt (55) kommuniziert und die dazu angepasst ist, der Befestigungsschraube zu erlauben im Gewindeeingriff zu stehen und die Austrittsvertiefung (56) zu durchdringen,
wobei die Gleitform (92) einen Formstift (*molding pin*) (93) beinhaltet, der einen Mutter-aufnehmenden-Abschnitt-bildenden Abschnitt (93A) und einen Austrittsvertiefungs-bildenden Abschnitt (93B) umfasst, der in einer seitlichen Richtung (LD) enger als der Mutter-aufnehmenden-Abschnitt-bildenden Abschnitt (93A) ist, wobei der Austrittsvertiefungs-bildenden Abschnitt (93B) an den lateralen Seiten durch das Paar von festhaltenden Abschnitten (69) festgehalten wird,
wobei ein Befestigungsabschnitt (12) des Leiters (10), an den die Befestigungsschraube zu befestigen ist, am oberen Ende des Mutter aufnehmenden Abschnitts (55) gebildet wird,
wobei die Austrittsvertiefung (56) mit einer Bodenwand (56A) gebildet wird, die das Paar von festhaltenden Abschnitten (69) verbindet; und
wobei die Gleitform (92) an der oberen und unteren Seite durch den Befestigungsabschnitt (12) des Leiters (10) und die Bodenwand (56A) festgehalten wird, wobei die Oben-unten-Richtung zur ersten Richtung (VD) parallel ist.

2. Ein Verfahren nach Anspruch 1, wobei der primäre gegossene Artikel (60) derart gebildet wird, dass ein oder mehrere Kerne (65), die für den einen oder die mehreren Leiter (10) individuell gebildet werden, im Wesentlichen Seite an Seite in seitlicher Richtung (LD) angeordnet, bereitgestellt werden.

## Revendications

1. Un procédé de production pour produire un connecteur de dispositif, dans lequel un ou plusieurs conducteurs (10) à connecter à des bornes côté dispositif fournies dans un dispositif, sont rendus solidaires par une portion moulée en résine (50), comprenant une portion moulée primaire (61) et une portion moulée secondaire (70), comprenant les étapes suivantes, consistant à :
mouler un article moulé primaire (60), dans lequel le ou les conducteurs (10) sont rendus solidaires par une portion moulée primaire (61) de résine synthétique ;
mouler une portion moulée secondaire (70) constituée de résine synthétique pour former intégralement l'article moulé primaire (60) et une plaque métallique (30) à attacher et à fixer au dispositif, sachant que la portion moulée secondaire (70) est formée par une matrice de moulage secondaire incluant les deux matrices de moulage un et deux (90, 91) qui s'ouvrent dans une première direction (VD) et au moins une matrice à glissement (92) qui s'ouvre dans une deuxième direction (FBD) s'entrecroisant avec la première direction (VD) ;
tout en retenant fermement la matrice à glissement (92), au moyen d'une paire de portions de retenue ferme (69) disposées pour s'entrecroiser avec une direction d'injection (X1), dans laquelle de la résine de moulage pour la formation de la portion moulée secondaire (70) est injectée et fournie sur la portion moulée primaire (61) avant la formation de la portion moulée secondaire (70), la paire de portions de retenue ferme (69) fait face l'une à l'autre dans la direction d'injection (X1) et s'étend verticalement vers le haut ;
former, par la matrice à glissement (92) dans la portion moulée en résine (50), au moins une portion de logement d'écrou (55) pour le logement au moins partiel d'un écrou qui est à engager par vissage avec un boulon de fixation à fixer au conducteur (10), et au moins un évidement d'échappement (56) communiquant avec la portion de logement d'écrou (55) et adaptée de manière à permettre au boulon de fixation qui est engagé par vissage avec l'écrou et qui passe à travers celui-ci, de s'échapper,
sachant que la matrice à glissement (92) inclut une broche de moulage (93) comprenant une portion de formation de portion de logement d'écrou (93A) et une portion de formation d'évidement d'échappement (93B) plus étroite de la portion de formation de portion de logement d'écrou (93A) en direction latérale (LD), la portion de formation d'évidement d'échappement (93B) étant retenue fermement aux faces latérales par une paire de portions de retenue ferme (69),
sachant qu'une portion de fixation (12) du conducteur (10) à laquelle le boulon de fixation est à fixer est formée à l'extrémité supérieure de la portion de logement d'écrou (55),
sachant que l'évidement d'échappement (56) est formé avec une paroi de fond (56A) raccordant la paire de portions de retenue ferme (69) ; et
sachant que la matrice à glissement (92) est retenue fermement à des faces supérieure et inférieure par la portion de fixation (12) du conducteur (10) et la paroi de fond (56A), la direction haut-bas étant parallèle à la première direction (VD).

2. Un procédé d'après la revendication 1, sachant que l'article moulé primaire (60) est formé de manière qu'un ou plusieurs noyaux (65) formés individuellement pour le ou les respectifs conducteurs (10) soient fournies en étant préférablement agencés essentiellement côté à côté dans une direction latérale (LD).
